# EUROPEAN PATENT APPLICATION

(11) **EP 0 885 929 A1**
(43) Date of publication of application: **23.12.1998**
(21) Application number: 98304704.4
(22) Date of filing: 15.06.1998
(51) Int. Cl.: C08L 69/00, C08K 5/527

(54) **Polycarbonate composition for vented moldings**

(30) Priority: 16.06.1997 US 876602
(71) Applicant: GENERAL ELECTRIC COMPANY, Schenectady, NY 12345 (US)
(72) Inventor: Hoeks, Theodorus Lambertus, 4613 AS Bergen op Zoom (NL); Maas, Christianus J.J., 4411 AP Rilland (NL)
(74) Representative: Szary, Anne Catherine, Dr.

(57) **Abstract**

An aromatic polycarbonate composition having improved hydrolytic stability while maintaining good processing properties which composition consists of an aromatic polycarbonate and an additive consisting of at least one bis(aralkylphenyl)pentaerythritol diphosphite and at least one particular epoxy wherein the epoxy has an on-set temperature of at least 255°C and, preferably, at least 280°C. The composition can be formed into the finished article without predrying the composition to remove moisture and under venting. Also included herein is a process of preparing articles such as injection molded or extruded articles particularly translucent polycarbonate articles which are essentially free of splay.

## Description

The present invention is directed to a thermoplastic aromatic polycarbonate composition having improved hydrolytic stability, while maintaining good processibility properties. More specifically the composition of this invention comprises in combination an aromatic polycarbonate resin and a stabilizing system comprising a particular phosphite and an epoxy both in an amount sufficient to provide hydrolytic stability to the polycarbonate composition, while maintaining good processability properties without the need for predrying of the composition before molding.

It has long been the custom to predry polymeric compositions before molding or extruding into the final form such as by injection molding, profile extrusions, sheet and film extrusion and such other final processing processes where the composition is predried before final formation thereof. However, in order to reduce time and costs, it is desirable to process polycarbonate compositions without predrying. Such has been attempted with vented equipment. However, these compositions even in vented forming equipment resulted in the formed part having "splay" formation due to moisture still remaining in the composition during molding or forming of the final article particularly when forming transparent or translucent parts. It is further expected that even with pigmented compositions, "splay" conditions can occur if the moisture level is too high in the composition. It appears that even minor amounts of water in the composition particularly with the impurities present in the pigments and high processing temperatures cause the "splay" phenomena. In an attempt to reduce the moisture and "splay" phenomena without predrying, certain additives have been incorporated in the composition such as tri (2,4-di-t-butyl phenyl phosphite) or a bis (2,4-di-t-butylphenol) pentaerythritol diphosphite alone or even with an epoxide does not reduce the moisture sufficiently to reduce or eliminate splay again particularly for transparent or translucent or low pigmented polycarbonates especially when employing such pigment as barium sulfate (BaSO₄) or titanium dioxide (TiO₂). It is believed that the water will form acids which causes a chain scission reaction which appears to be more severe with low pigmented polycarbonates.

The addition of additives to polycarbonate compositions to achieve certain properties or improved properties has been known to affect processibility of the polycarbonate resin during extrusion or injection molding. Therefore, the additive employed. to achieve improved or certain properties and in this case to minimize or eliminate "splay" should not affect processibility or at least minimize this effect on processability or degradation of the polycarbonate. It has also been known to stabilize polycarbonate resin compositions by employing phosphites and/or epoxies as stabilizing additives. However, these are broadly disclosed in such U.S. Patents as 4,381,358, 4,358,563 and 3,673,146. They do not disclose any criticality as to a particular additive as is required by the instant invention without predrying the composition. Even the use of bis(aralkyl phenyl) pentaerythritol diphosphites alone as disclosed in U.S. Patents 5,364,895 and 5,438,086 is not sufficient to reduce the moisture level in aromatic polycarbonate compositions without predrying the composition even with vented molding or forming equipment.

### SUMMARY OF THE INVENTION

This invention is directed to a hydrolytically stable aromatic polycarbonate composition wherein the polycarbonate is stabilized with a stabilizing additive comprising a particular phosphite and an epoxy composition. This invention is also directed to a process for preparing an article made from a polycarbonate composition without the need for predrying the composition. The article prepared from the composition and process of this invention may be either an injection molded article, an extruded sheet or film, an extruded profile, co-extrusion article or an extrusion blow molded article and is essentially free of splay.

The phosphite employed herein is a bis(aralkyl phenyl) pentaerythritol diphosphite or a combination of two or more such phosphites. The di-phosphites that may be employed herein are described in U.S. Patents 5,364,895 and 5, 438,086 both of which are incorporated herein by reference. The preferred bis (aralkyl phenyl) pentaerythritol diphosphite employed in the practice of this invention is bis (2,4-dicumylphenyl) pentaerythritol diphosphite.

The epoxy composition employed in the practice of this invention can be any epoxy composition having an on-set temperature of at least about 255°C as determined by thermal gravometric analyzer (TGA) in a nitrogen atmosphere. Preferably the epoxy compositions employed in the practice of these inventions are glycidyl ethers based on dihydricphenols such as 1,1-bis (4-hydroxyphenyl) methane (BPF) and 2,2,-bis(4-hydroxyphenyl) propane (BPA) and mixtures thereof. Both liquid and solid ethers can be applied. Glycidyl ethers of polyfunctional phenolcresol novolacs, aliphatic and cycloaliphatic/aromatic epoxy resins, like, epoxidized soyabean oil, bis(2,3-epoxypropyl) ester of terephthalic acid, tris(2,3-epoxypropyl) ester of 1,2,4 benzene-tricarboxylic acid, 3,4 epoxycyclohexylmethyl-3,4 epoxycyclohexylcarboxylate and the like are suitable herein. Epoxides containing heterocyclic groups like triglycidyl isocyanurate are applicable, as well as mixtures of epoxies. The critical feature of the epoxy of this instant invention is that the epoxy must have an onset temperature of at least about 255°C. If the epoxy has an on-set temperature of less than about 255°C, severe plate-out may occur.

The epoxy employed herein can be represented by the formula 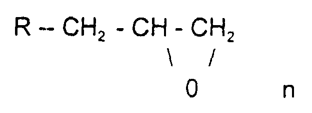 having an on-set temperature of at least about 255°C and, preferably, at least about 280°C and, more particularly, at least about 300°C. In the above formula R is independently selected from the group consisting of alkyl, aryl, aryalkyl, cycloalkyl, heterocyclics, substituted derivatives thereof and the like having at least 2 carbons and, preferably, 2 to 50 carbons and n is an integer of from 1-5. The preferred epoxy is a cycloalephatic epoxy resin.

The amount of stabilizer employed herein should be that amount sufficient to hydrolytically stabilize the aromatic polycarbonate resin against splay formation when forming the resin into the final article without predrying the composition, and maintain good processibility properties during extrusion or molding. Preferably, the stabilizer system comprises about 0.01 weight % to about 0.50 weight % based on the weight of the polycarbonate resin. More particularly the stabilizer is about 0.01 to about 0.3 weight %.

While a single bis (aralkylphenyl) pentaerythritol diphosphite in combination with the epoxy is applicable in this invention, a combination of such phosphites may be employed. When employing a combination of two such phosphites, the phosphite part of the stabilizer preferably comprises about 10-90 weight % of one phosphite and about 90-10 weight % of the other phosphite based on the total weight of the particular phosphite employed herein. The actual combination of phosphites, when employing more than two phosphites may actually be any combination that is sufficient, when combined with the particular epoxy of this invention, to stabilize the aromatic polycarbonate.

The stabilizer system of this invention i.e. the ratio of phosphite to epoxy should be about 5:1 to 1:5. Preferably, the ratio is about 3:1 to 1:3.

The aromatic polycarbonate resin employed herein may be any of the known aromatic polycarbonates, co-polycarbonates, or blends of polycarbonates with other polymers or co-polycarbonates. The aromatic polycarbonate employed in the practice of this invention may be prepared by reacting a dihydric phenol with a carbonate precursor in the presence of an acid acceptor and generally a molecular weight regulator. Any dihydric phenol may be employed in preparing the polycarbonate resin disclosed herein. Preferably, they are mononuclear or polynuclear aromatic compounds containing as functional groups two hydroxyl radicals, each of which is attached directly to a carbon atom of an aromatic nucleus. Examples of some of the dihydric phenols which can be employed in the practice of this invention are bisphenols such as 1,1-bis (4-hydroxyphenyl) methane, 2,2 - bis(4-hydroxyphenyl) propane, 4,4 - bis(4 - hydroxyphenyl) heptane, etc.; dihydric phenol ethers such as bis(4 - hydroxyphenyl ether, bis(3,5 - dichloro - 4 - hydroxyphenyl) ether, etc.; dihydroxy diphenyls such as p,p' - dihydroxydiphenyl, 3,3' - dichloro - 4,4' - dihydroxy-diphenyl, etc.; dihydroxyaryl sulfones such as bis(4-hydroxyphenyl) sulfone, bis(3,5 - dimethyl - 4 - hydroxyphenyl) sulfone, bis (3 - methyl - 5 - ethyl - 4 - hydroxyphenyl) sulfone, etc.; dihydroxy benzenes, resorcinol, hydroquinone; halo- and alkyl-substituted dihydroxy benzenes such as 1,4 - dihydroxy - 2 - chlorobenzene, 1,4-dihydroxy - 2,3 - dichlorobenzene, 1,4 - dihydroxy - 2-methylbenzene, etc.; and dihydroxy diphenyl sulfoxides such as bis(4-hydroxyphenyl) sulfoxide, bis(3,5-dibromo-4-hydroxyphenyl) sulfoxide, etc.

The carbonate precursor employed in the practice of this invention can be either carbonyl halide or a haloformate. The carbonyl halides which can be employed herein are carbonyl bromide, carbonyl chloride, carbonylfluoride, etc.; or mixtures thereof. The haloformates suitable for use herein include bishaloformates of dihydric phenols (bischloroformates of hydroquinone, etc.) or glycols (bishaloformates of ethylene glycol, neopentyl glycol, polyethylene glycol, etc). While other carbonate precursors will occur to those skilled in the art, carbonyl chloride, also known as phosgene, is preferred.

The reaction disclosed above is preferably known as an interfacial process or reaction between the dihydric compound and a carbonyl chloride such as phosgene. Another process for preparing the aromatic polycarbonate of this invention is the transesterification process which involves the transesterification of an aromatic dihydroxy compound and a diester carbonate. This process is known as the melt process. In the practice of this invention, the process of producing the aromatic polycarbonate is not critical. The critical feature of this invention is the composition of the aromatic polycarbonate and the stabilizer system. As used herein, aromatic polycarbonate shall mean and include any of the aromatic polycarbonates and combinations thereof as set forth above.

As stated previously, the stabilizer disclosed herein provides hydrolytical stability to the polycarbonate resin and therefore provides a composition that can be formed in a vented forming equipment such as an injection molding equipment of extrusion equipment or other vented forming equipment without predrying the resin composition. Venting may be at atmospheric pressure or under a vacuum.

### DETAILED DESCRIPTON OF THE EXAMPLES OF THIS INVENTION

This invention can be further described by means of the following Examples, it being understood, however, that this invention shall, in no way, be restricted by these Examples. In the Examples where amounts are in terms of percent, they are percent by weight based on the total weight of the formulation.

The ingredients employed in the Examples are as follows:
- PC -: aromatic polycarbonate having an intrinsic viscosity of about 0.48 deciliters per gram as measured at 20°C in methylene chloride.
- A -: Tri(2,4-di-t-butylphenyl) phosphite
- B -: bis (2,4-di-t-butylphenol) pentaerythritol diphosphite .
- C -: 2,4,6 tri-t-butylphenyl 2 butyl 2 ethyl 1,3 propane diol
- D -: triphenyl phosphine
- E -: Bis(2,4 dicumylphenyl) pentaerythritol diphosphite
- Epoxy -: Cycloaliphatic epoxy resin.

### Example 1

PC powder and additives as set forth in the following TABLE 1 were compounded and extruded into strands at a melt temperature of about 310°C. Each formulations contained essentially the same quantity of polycarbonate and usual weight % of UV absorber and mold release agent and 1.2 weight % of BaSO₄. The polycarbonate content varied only with respect to the quantity of stabilizer employed in each formulation. The extruded strands were quickly quenched in water and pelletized. The pellets were not predried, analyzed for moisure and found to have a moisture content of about 0.2 weight %. The pellets were then injection molded in a vented injection molding machine at about 310°C and about 600 kg/cm² pressure into sample plaques about 25 cm square by about 2.5 mm thick. The results are set forth in Table 1.

**TABLE 1**

| | Formulation | Splay | Mw Drop | % Mw Drop |
|---|---|---|---|---|
| 1. | 0.1% A | all over part | - | - |
| 2. | 0.1% Epoxy and 0.1% B | all over part | 2033 | 9 |
| 3. | 0.1% Epoxy and 0.1% C | Minor Splay | 1660 | 7.1 |
| 4. | 0.1% Epoxy and 0.1% E | No Splay | 584 | 2.5 |
| 5. | 0.1% D | No Splay | 1336 | |
| Mw - weight average molecular weight determined by Gel Permeation Chromatograph (GPC) on pellet and molded plaque. | | | | |
| Mw Drop - weight average molecular weight on pellet and thermally treated wet materials. | | | | |

The above results, which are the average of 5 samples each, clearly demonstrate that no splay is achieved with formulation 4 having the epoxy and particular diphosphite of this invention without substantially reducing the molecular weight of the polycarbonate. Again this Example is prepared without predrying the resin before injection molding of the sample plaques employing a vented under a vacuum injection molding machine. Even though formulation 5 have no splay, the degradation of the polycarbonate, as determined by the drop in Mw, was substantial compared to formulation 4 of this invention.

### Example 2

PC powder and additives as set forth in the following TABLE 2 were compounded, extended and pelletized under the same conditions as Example 1. Each formulation listed below contained the usual weight % of other additives as employed in Example 1 and the polycarbonate content was varied only with respect to the quantity of additives employed in each formulation. The formulations were analyzed for moisture and found to have a moisture content of about 0.15 weight %.

Each compounded formulation was not predried and was heat treated about for 8 minutes at about 300°C. The weight average molecular weight was determined on each sample (the average of 5 samples for each formulation) to determine the degradation effect on each polycarbonate formulation by the molecular weight drop. The results are set forth in TABLE 2.

**TABLE 2**

| | Formulation | Mw Drop | % Mw Drop |
|---|---|---|---|
| 6. | 0.1% A | 1740 | 6.7 |
| 7. | 0.1% A and 0.1% Epoxy | 1290 | 5.0 |
| 8. | 0.2% E | 4500 | 17.3 |
| 9. | 0.1% E | 3058 | 11.7 |
| 10. | 0.05% E | 1757 | 6.7 |
| 11. | 0.03% E | 1195 | 4.6 |
| 12. | 0.2% E and 0.1% Epoxy | 0 | 0 |
| 13. | 0.1% E and 0.1% Epoxy | 450 | 1.7 |
| 14. | 0.05% E and 0.1% Epoxy | 911 | 3.5 |
| 15. | 0.03% E and 0.1% Epoxy | 977 | 3.8 |
| 16. | 0.1% D | 2954 | 11.4 |

As can clearly be seen from the above formulation, the composition of this invention had essentially little or no effect on degradation of the polycarbonate. Even when employing additive E, bis (2,4 dicumylphenyl) pentaerythritol diphosphite, alone, i.e. without epoxy (formulations 8-11), the degradation of polycarbonate was significant compared to formulations employing epoxy namely 12-15. Also, please note the significant drop in molecular weight in formulations 1, 7, and 16 even when employing a phosphite with an epoxy, specifically formulation 2, other than the particular phosphite of this invention.

This invention has been described with reference to preferred and altemative embodiments. Obviously, modifications and alternatives will occur to others upon the understanding of the specification, It is intended to include all such modifications and altematives insofar as they come within the scope of the appended claims or the equivalents thereof.

## Claims

1. An aromatic polycarbonate composition having improved hydrolytic stability, while maintaining good processing properties, and which can be formed under venting without the necessity of predrying the polycarbonate composition, said composition comprising an aromatic polycarbonate and an additive comprising in combination at least one bis(aralkylphenyl) pentaerythritol diphosphite and at least one epoxy having an on-set temperature of greater than 255° C.

2. The composition of claim 1 wherein the stabilizer comprises at least two different bis(aralkylphenyl) pentaerythritol diphosphites.

3. The composition of claim 1 or claim 2 wherein the epoxy comprises a mixture of at least two epoxies each having an on-set temperature of at least 255°C.

4. The composition of any preceding claim wherein the additive comprises about 0.01 to about 0.50 weight % based on the weight of the polycarbonate composition.

5. The composition of claim 4 wherein the additive composition comprises about 0.01 to about 0.10 weight %.

6. The composition of any preceding claim wherein the epoxy has an on-set temperature of at least 280°C.

7. The composition of claim 1 wherein the bis (aralkylphenyl) pentaerythritol diphosphite is bis (2,4 dicumylphenyl) pentaerythritol diphosphite.

8. The composition of claim 1 wherein the epoxy is cycloaliphatic epoxy resin.

9. A process of preparing a thermoplastic article from an aromatic polycarbonate composition having improved hydrolytic stability by compounding the aromatic polycarbonate composition without predrying the composition and forming the compounded composition under heat of pressure, and venting to form the final article, wherein the final article is essentially free of splay and wherein the composition comprises an aromatic polycarbonate and an additive comprising in combination at least one bis(aralkylphenyl) pentaerythritol diphosphite and at least one epoxy having an on-set temperature of at least 255° C.

10. The process of claim 9 wherein the article is a translucent injection molded article, a clear extruded polycarbonate sheet or an extruded profile.

11. The process of claim 9 wherein venting is under a vacuum.
